(19)

**Europäisches Patentamt**
**European Patent Office**
**Office européen des brevets**

(11) **EP 4 644 619 A1**

(12) **EUROPEAN PATENT APPLICATION**
published in accordance with Art. 153(4) EPC

(43) Date of publication:
05.11.2025 Bulletin 2025/45

(21) Application number: 23911346.7

(22) Date of filing: 19.10.2023

(51) International Patent Classification (IPC):
*E02F 9/20* (2006.01)          *B60L 9/18* (2006.01)
*B60L 50/60* (2019.01)          *B60L 58/10* (2019.01)

(52) Cooperative Patent Classification (CPC):
E02F 9/207; B60L 9/18; B60L 50/60; B60L 58/10;
E02F 9/20; E02F 9/2091

(86) International application number:
PCT/JP2023/037821

(87) International publication number:
WO 2024/142562 (04.07.2024 Gazette 2024/27)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 28.12.2022 JP 2022211306

(71) Applicant: **KUBOTA CORPORATION
Osaka-shi, Osaka 556-8601 (JP)**

(72) Inventor: **ITO Junki
Sakai-shi, Osaka 590-0908 (JP)**

(74) Representative: **Cabinet Beau de Loménie
103, rue de Grenelle / CS 90800
75340 Paris Cedex 07 (FR)**

(54) **ELECTRIC WORK MACHINE AND METHOD FOR CONTROLLING ELECTRIC WORK MACHINE**

(57)    To reduce electric power consumption more.

An electric working machine (1) includes an electric motor (46) to be driven by electric power, a rotational speed detector (35a) to detect an actual rotational speed (Ra) of the electric motor, and a controller (30) to control a rotational speed and an output torque (T) of the electric motor. The controller is switchable between (i) a first mode in which the controller controls the electric motor such that a relationship between the actual rotational speed and a first upper limit value (Tr) of the output torque satisfies a first map and (ii) a second mode in which the controller controls the electric motor such that the relationship between the actual rotational speed and the first upper limit value of the output torque satisfies a second map. The first map and the second map are defined such that the first upper limit value of the output torque at a certain actual rotational speed on the second map is smaller than the first upper limit value of the output torque at the same certain actual rotational speed on the first map, and that a difference between the first upper limit value on the first map and the first upper limit value on the second map increases as the actual rotational speed increases.

Fig.4

EP 4 644 619 A1

**Description**

Technical Field

The present invention relates to an electric working machine to be driven by power of an electric motor and a method of controlling an electric working machine.

Background Art

Patent Literature 1 discloses a swivel-type electric working vehicle in which a swivel body is swivelably provided on a traveling device, a working machine is provided on a front portion of the swivel body, a battery is provided on a rear portion of the swivel body, and the working machine and the traveling device can operate by power supplied from the battery.

Citation List

Patent Literature

PTL 1: Japanese Unexamined Patent Application Publication No. 2013-144888

Summary of Invention

Technical Problem

However, there are demands for a function of reducing consumption of electric power accumulated in a battery (battery unit) (energy-saving mode) in an electric working machine such as a backhoe that operates by electric power supplied from the battery. One example of the energy-saving mode is to lower an upper limit of a rotational speed of the electric motor as compared with a normal mode. However, such an energy-saving mode has a problem that an effect of reducing electric power consumption of the battery unit cannot be obtained in the case where an electric motor is controlled at a relatively low rotational speed.

The present invention was accomplished to solve such a problem of the related art, and an object of the present invention is to provide an electric working machine and a method of controlling the electric working machine that can reduce electric power consumption more. Solution to Problem

An electric working machine according to an example embodiment of the present invention includes an electric motor to be driven by electric power, a rotational speed detector to detect an actual rotational speed of the electric motor, and a controller to control a rotational speed and an output torque of the electric motor, wherein the controller is switchable between (i) a first mode in which the controller controls the electric motor such that a relationship between the actual rotational speed and a first upper limit value of the output torque satisfies a first map and (ii) a second mode in which the controller controls the electric motor such that the relationship between the actual rotational speed and the first upper limit value of the output torque satisfies a second map, and the first map and the second map are defined such that the first upper limit value of the output torque at a certain actual rotational speed on the second map is smaller than the first upper limit value of the output torque at the same certain actual rotational speed on the first map, and that a difference between the first upper limit value on the first map and the first upper limit value on the second map increases as the actual rotational speed increases.

The controller may be configured or programmed to control the output torque at a value equal to or less than the first upper limit value.

The first map may be defined such that the actual rotational speed is equal to or less than a second upper limit value. The second map may be defined such that the actual rotational speed is equal to or less than a third upper limit value. The third upper limit value may be smaller than the second upper limit value.

The first map may include a first line showing the first upper limit value versus the actual rotational speed. The second map may include a second line showing the first upper limit value versus the actual rotational speed. The second line may include a shape obtained by reducing the first line in a direction in which the actual rotational speed and the output torque decrease.

The first line and the second line may each at least include a portion where the first upper limit value decreases as the actual rotational speed increases.

The electric working machine may further include a working device to be actuated by power generated by the electric motor, and a working machine manual operator to receive an operation relating to the working device. The controller may be configured or programmed to, in a case that a requested torque which is an output torque requested in response to an operation on the working machine manual operator is higher than the first upper limit value corresponding to the actual rotational speed at a time of the operation, reduce the rotational speed of the electric motor to the actual rotational speed at which the first upper limit value is equal to or greater than the requested torque.

The electric working machine may further include a battery unit to supply electric power to the electric motor, an inverter to adjust electric power supplied from the battery unit to the electric motor, and a memory and/or a storage to store the first map and the second map. The controller may be configured or programmed to control the output torque by outputting an instruction signal to the inverter based on the first map or the second map.

The electric working machine may further include a battery unit to supply electric power to the electric motor, an inverter to adjust electric power supplied from the battery unit to the electric motor, and a memory and/or a storage to store (i) a third map which is obtained by converting the first upper limit value of the first map into an output power of the electric motor and which shows a relationship between the actual rotational speed and the output power and (ii) a fourth map which is obtained by converting the first upper limit value of the second map into the output power and which shows a relationship between the actual rotational speed and the output power. The controller may be configured or programmed to control the output torque by outputting an instruction signal to the inverter based on the third map or the fourth map.

The electric working machine may further include a battery unit to supply electric power to the electric motor, an inverter to adjust electric power supplied from the battery unit to the electric motor, and a memory and/or a storage to store (i) a fifth map which is obtained by converting the first upper limit value of the first map into a current value of electric power supplied to the electric motor and which shows a relationship between the actual rotational speed and the current value and (ii) a sixth map which is obtained by converting the first upper limit value of the second map into the current value and which shows a relationship between the actual rotational speed and the current value. The controller may be configured or programmed to control the output torque by outputting an instruction signal to the inverter based on the fifth map or the sixth map.

The electric working machine may further include a mode switch to be operated to switch the modes. The controller may be configured or programmed to switch the modes in response to an operation of the mode switch.

A method of controlling an electric working machine according to an example embodiment of the present invention is a method of controlling an electric working machine including an electric motor, the method including controlling the electric motor selectively using a first map that defines a relationship between an actual rotational speed of the electric motor and a first upper limit value of an output torque of the electric motor or using a second map in which the first upper limit value of the output torque corresponding to each actual rotational speed is smaller than that of the first map.

Advantageous Effects of Invention

With the electric working machine and the method of controlling the electric working machine, it is possible to reduce electric power consumption more.

Brief Description of Drawings

[FIG. 1] FIG. 1 is an electric block diagram of an electric working machine.

[FIG. 2] FIG. 2 is a hydraulic circuit diagram of the electric working machine.

[FIG. 3] FIG. 3 shows graphs to explain an example of a first map.

[FIG. 4] FIG. 4 shows graphs to explain an example of a second map.

[FIG. 5A] FIG. 5A illustrates a case where requested torque exceeds output torque in a first mode.

[FIG. 5B] FIG. 5B illustrates a case where requested torque exceeds output torque in a second mode.

[FIG. 6] FIG. 6 illustrates a flow of a series of processes of control of an electric motor performed by a controller.

[FIG. 7] FIG. 7 shows graphs to explain a second map according to a variation.

[FIG. 8] FIG. 8 shows graphs to explain a third map and a fourth map.

[FIG. 9] FIG. 9 shows graphs to explain a fifth map and a sixth map.

[FIG. 10] FIG. 10 is a general side view of the electric working machine.

Description of Embodiments

An embodiment of the present invention is described below with reference to the drawings.

First, an overall configuration of an electric working machine 1 is described.

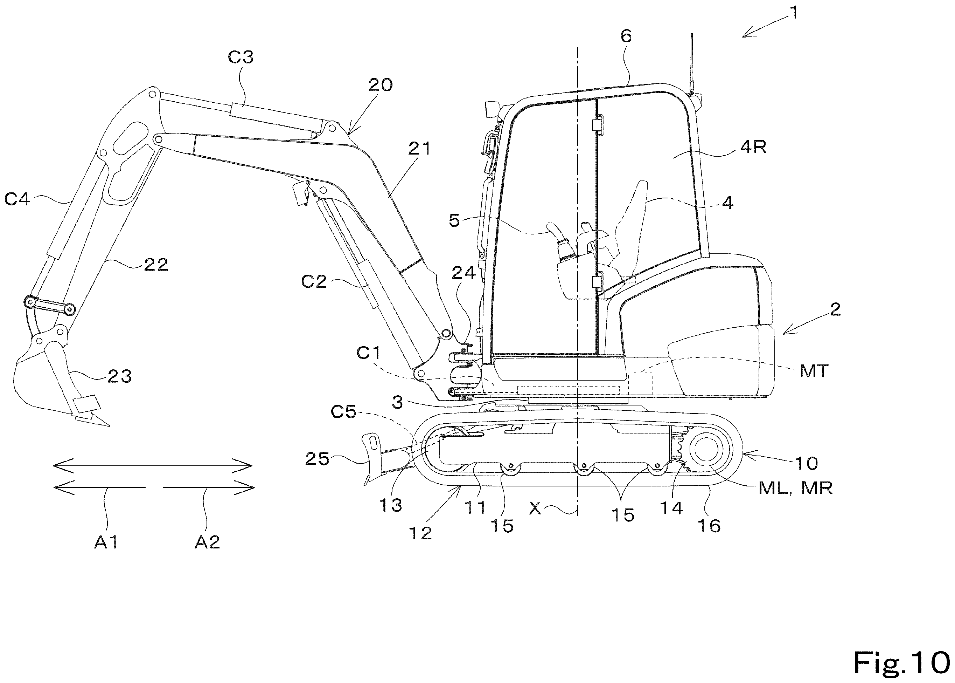

FIG. 10 is a general side view of the electric working machine 1. The electric working machine 1 is a backhoe, and includes a machine body (swivel base) 2, a traveling device 10, a working device 20, and the like. On the machine body 2, an operator's seat 4 on which a user sits and a protection mechanism 6 that protects the operator's seat 4 from front, rear, left, right and upper sides are provided. A manual operator 5 to operate the electric working machine 1 is provided around the operator's seat 4.

In the following description, a direction (a direction indicated by arrow A1 in FIG. 10) which a user sitting on the operator's seat 4 faces is referred to as a forward direction, and an opposite direction (a direction indicated by arrow A2 in FIG. 10) is referred to as a rearward direction. Furthermore, a left side viewed from a user's point of view (the near side in FIG. 10) is referred to as a leftward direction, and a right side viewed from the user's point of view (the far side in FIG. 10) is referred to as a rightward direction. A horizontal direction orthogonal to a front-rear direction (machine body front-rear direction) is referred to as a machine body width direction.

The traveling device 10 is a device that allows the machine body 2 to travel, and includes a traveling frame (truck frame) 11 and a traveling mechanism 12. The traveling frame 11 is a structure around which the traveling mechanism 12 is attached and on which the machine body 2 is supported.

The traveling mechanism 12 is, for example, a crawler-type traveling mechanism. The traveling mechanism 12 is provided on the left and right of the traveling frame 11. The traveling mechanism 12 includes an idler 13, a drive wheel 14, a plurality of track rollers 15, an endless crawler belt 16, and a traveling motor ML or MR.

The idler 13 is provided on a front portion of the traveling frame 11. The drive wheel 14 is provided on a rear portion of the traveling frame 11. The plurality of track rollers 15 are provided between the idler 13 and the drive wheel 14. The crawler belt 16 is suspended over the idler 13, the drive wheel 14, and the track rollers 15.

The left traveling motor ML is included in the traveling mechanism 12 on the left of the traveling frame 11. The right traveling motor MR is included in the traveling mechanism 12 on the right of the traveling frame 11. These traveling motors ML and MR are hydraulic motors. In each traveling mechanism 12, the drive wheel 14 is driven by power of the traveling motor ML or MR to rotate, and the crawler belt 16 thus circulates in a circumferential direction.

The machine body 2 is supported on the traveling frame 11 with a swivel bearing 3 interposed therebetween so as to be rotatable about a swivel axis X. A swivel motor MT is provided in the machine body 2. The swivel motor MT is a hydraulic motor (hydraulic actuator). The machine body 2 swivels about the swivel axis X by power of the swivel motor MT.

The working device 20 is supported on a front portion of the machine body 2. The working device 20 includes a boom 21, an arm 22, a bucket (working tool) 23, a dozer device 25, and hydraulic cylinders (hydraulic actuators) C1 to C5. A base end of the boom 21 is pivotally attached to a swing bracket 24 so as to be rotatable about a horizontal axis (an axis extending in the machine body width direction). Accordingly, the boom 21 is swingable in an up-down direction (vertical direction). The arm 22 is pivotally attached to a leading end of the boom 21 so as to be rotatable about a horizontal axis. Accordingly, the arm 22 is swingable in the front-rear direction or the up-down direction. The bucket 23 is provided on a leading end of the arm 22 so as to be capable of performing a shoveling action and a dumping action.

To the electric working machine 1, another working tool (hydraulic attachment) that can be driven by a hydraulic actuator can be attached instead of or in addition to the bucket 23. Examples of such a working tool include a hydraulic breaker, a hydraulic crusher, an angle broom, an earth auger, a pallet fork, a sweeper, a mower, and a snow blower.

The swing bracket 24 swings leftward and rightward by extension and contraction of the swing cylinder C1 provided in the machine body 2. The boom 21 swings upward and downward (forward and rearward) by extension and contraction of the boom cylinder C2. The arm 22 swings upward and downward (forward and rearward) by extension and contraction of the arm cylinder C3. The bucket 23 performs a shoveling action and a dumping action by extension and contraction of the bucket cylinder (working tool cylinder) C4. The swing cylinder C1, the boom cylinder C2, the arm cylinder C3, and the bucket cylinder C4 are hydraulic cylinders (hydraulic actuators).

The dozer device 25 is attached to a front portion of the traveling device 10. The dozer device 25 swings upward and downward by extension and contraction of the dozer cylinder C5. The dozer cylinder C5 is attached to the traveling frame 11. The dozer cylinder C5 is a hydraulic cylinder (hydraulic actuator).

The electric working machine 1 performs work while traveling by the traveling device 10 including the traveling motors ML and MR and swiveling the machine body 2 by the working device 20 including the hydraulic cylinders C1 to C5 and the swivel motor MT. That is, it can be said that not only the working device 20, but also the traveling device 10 and the swivel motor MT are working devices 20 included in the electric working machine 1. Hereinafter, for convenience of description, the working device 20 and the traveling device 10 are sometimes collectively referred to as "working devices 20 and 10". Note that hydraulic actuators such as the traveling motors ML and MR, the swivel motor MT, and the hydraulic cylinders C1 to C5 are included in hydraulic equipment.

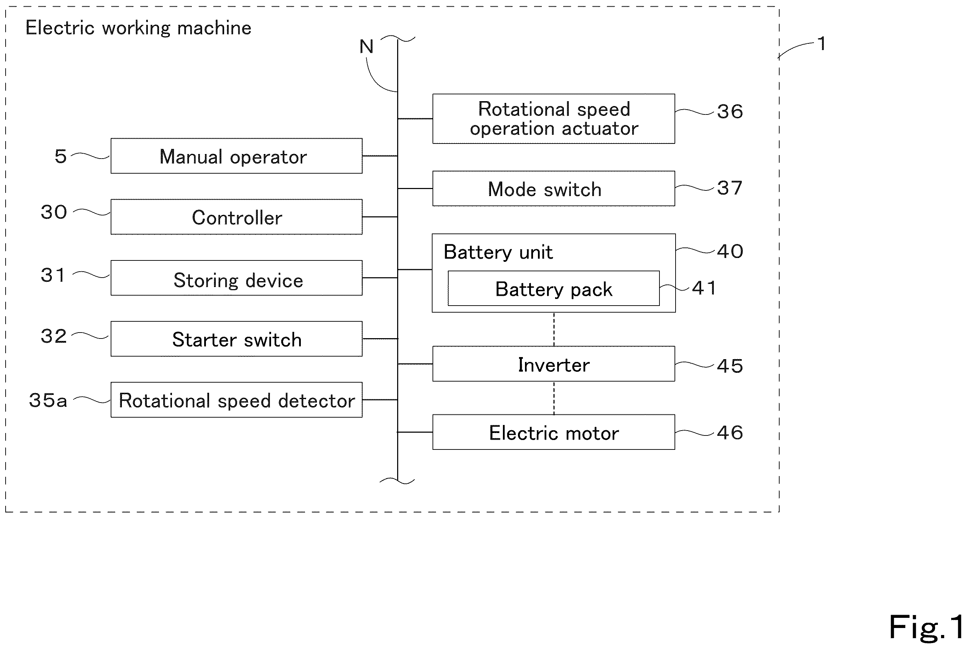

Next, an electric configuration of the electric working machine 1 is described. FIG. 1 is an electric block diagram of the electric working machine 1 according to the present embodiment. As illustrated in FIG. 1, the electric working machine 1 includes a controller 30, a storing device (memory and/or storage) 31, a battery unit 40, an inverter 45, and an electric motor 46.

The controller 30 is provided in the machine body 2 or inside the protection mechanism 6 and is a device including an electric/electronic circuit, a CPU, a program stored in a memory, and the like. The controller 30 controls various devices connected to an in-vehicle network N of the electric working machine 1. The controller 30 control operation of units included in the electric working machine 1 such as the units illustrated in FIG. 1. For example, the controller 30 can control drive of the electric motor 46.

A starter switch 32 is connected to the controller 30. The starter switch 32 is provided inside the protection mechanism 6, and the user sitting on the operator's seat 4 can operate the starter switch 32. The starter switch 32 is operated to start or stop the electric working machine 1. The controller 30 starts each unit included in the electric working machine 1 in response to an ON operation of the starter switch 32 and stops each unit included in the electric working machine 1 in response to an OFF operation of the starter switch 32.

The storing device 31 is a recording medium such as a solid state drive (SSD) or a hard disk drive (HDD) and stores therein various kinds of information concerning the electric working machine 1.

The battery unit 40 is a structure that can store electric power, and discharges (outputs) the stored electric power. The battery unit 40 is mounted on the machine body 2. The battery unit 40 includes a battery pack 41. The battery pack 41 is a secondary battery (rechargeable battery) such as a lithium-ion battery including at least one battery.

The inverter 45 is electrically connected to the battery unit 40 and the electric motor 46, and converts DC electric power input from the battery unit 40 into three-phase AC electric power and supplies the three-phase AC electric power to the electric motor 46. Furthermore, the inverter 45 adjusts electric power supplied from the battery unit 40 to the electric motor 46 based on an instruction signal transmitted from the controller 30. The instruction signal is information concerning electric power supplied to the electric motor 46 and includes, for example, a frequency and a voltage. The inverter 45 generates a pulse width modulation (PWM) control signal based on the instruction signal, and a switching circuit is switched ON and OFF based on the PWM control signal. The inverter 45 can thus convert DC electric power into three-phase AC electric power and freely adjust a frequency and a voltage of electric power supplied to the electric motor 46.

The electric motor 46 receives electric power from the battery unit 40 (the battery pack 41), is driven by the supplied electric power, and generates power. The electric motor 46 is electrically connected to the inverter 45 and is driven by electric power supplied from the battery unit 40 via the inverter 45. The electric motor 46 is a drive source of the electric working machine 1 and is, for example, a permanent magnet embedded three-phase AC synchronous motor. The electric motor 46 includes a rotor that is rotatable and a stator that generates force for rotating the rotor.

Note that the electric motor 46 may be another kind of synchronous motor, and may be AC motor or may be a DC motor.

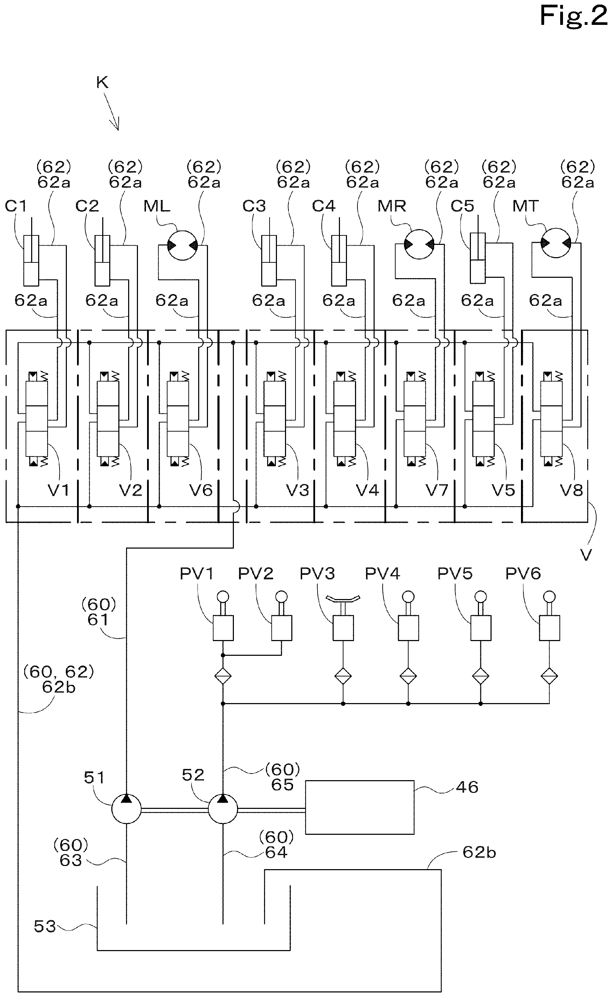

Next, a hydraulic circuit K included in the electric working machine 1 is described. FIG. 2 is a hydraulic circuit diagram of the electric working machine 1. As illustrated in FIG. 2, hydraulic equipment such as the hydraulic actuators C1 to C5, ML, MR, and MT, a control valve V, hydraulic pumps 51 and 52, a hydraulic fluid tank 53, operation valves PV1 to PV6, and a fluid passage 60 is provided in the hydraulic circuit K. The hydraulic equipment provided in the hydraulic circuit K of the electric working machine 1 operates by power generated by the electric motor 46. Specifically, one of the hydraulic pumps 51 and 52 is a hydraulic pump 51 for actuation, and the other one of the hydraulic pumps 51 and 52 is a hydraulic pump 52 for control. These hydraulic pumps 51 and 52 are driven by power of the electric motor 46.

The hydraulic pump 51 for actuation sucks a hydraulic fluid stored in the hydraulic fluid tank 53 and delivers the hydraulic fluid to the control valve V. Although a single hydraulic pump 51 for actuation is illustrated in FIG. 2 for convenience of description, this is not restrictive, and an appropriate number of hydraulic pumps 51 for actuation that supply the hydraulic fluid to the hydraulic actuators C1 to C5, ML, MR, and MT may be provided.

The hydraulic pump 52 for control outputs a hydraulic pressure for a signal, a hydraulic pressure for control, or the like by delivering the hydraulic fluid in the hydraulic fluid tank 53. That is, the hydraulic pump 52 for control supplies (delivers) a pilot oil. An appropriate number of hydraulic pumps 52 for control may be provided.

The control valve V includes a plurality of controlling valves V1 to V8. The controlling valves V1 to V8 control (adjust) a flow rate of the hydraulic fluid output from the hydraulic pumps 51 and 52 to the hydraulic actuators C1 to C5, ML, MR, and MT. The swing controlling valve V1 controls a flow rate of a hydraulic fluid supplied to the swing cylinder C1. The boom controlling valve V2 controls a flow rate of a hydraulic fluid supplied to the boom cylinder C2. The arm controlling valve V3 controls a flow rate of a hydraulic fluid supplied to the arm cylinder C3. The bucket controlling valve V4 controls a flow rate of a hydraulic fluid supplied to the bucket cylinder C4. The dozer controlling valve V5 controls a flow rate of a hydraulic fluid supplied to the dozer cylinder C5. The traveling controlling valve V6 for left controls a flow rate of a hydraulic fluid supplied to the traveling motor ML on the left. The traveling controlling valve V7 for right controls a flow rate of a hydraulic fluid supplied to the traveling motor MR on the right. The swivel controlling valve V8 controls a flow rate of a hydraulic fluid supplied to the swivel motor MT.

The operation valves (remote control valves) PV1 to PV6 operate in accordance with an operation of various operation levers included in the manual operator 5. An operation member that is included in the manual operator 5 and receives an operation on the operation valves PV1 to PV6, that is, an operation member that receives an operation relating to the working devices 20 and 10 is sometimes referred to as a working machine manual operator. A pilot oil acts on the controlling valves V1 to V8 in proportion to actuation amounts (operation amounts) of the operation valves PV1 to PV6, and thus spools of the controlling valves V1 to V8 are moved. A hydraulic fluid of amounts proportional to amounts by which the spools of the controlling valves V1 to V8 are moved is supplied to the hydraulic actuators C1 to C5, ML, MR, and MT to be controlled. Furthermore, the hydraulic actuators C1 to C5, ML, MR, and MT are driven in accordance with amounts of hydraulic fluid supplied from the controlling valves V1 to V8.

In other words, by operating the operation levers, the hydraulic fluid (pilot oil) that acts on the controlling valves V1 to V8 is adjusted, and thus the controlling valves V1 to V8 are controlled. This adjusts amounts of the hydraulic fluid supplied from the controlling valves V1 to V8 to the hydraulic actuators C1 to C5, ML, MR, and MT, thus controlling drive and stoppage of the hydraulic actuators C1 to C5, ML, MR, and MT. In this way, the working devices 20 and 10 operate by a hydraulic pressure of the hydraulic fluid supplied from the hydraulic equipment (the hydraulic pump 51).

The fluid passage 60 is a flow passage that connects units provided in the hydraulic circuit K and through which the hydraulic fluid or pilot oil flows to the units. The fluid passage 60 includes a first fluid passage 61, a second fluid passage 62, a first suction fluid passage 63, a second suction fluid passage 64, and a third fluid passage 65.

The first suction fluid passage 63 is a flow passage through which the hydraulic fluid sucked from the hydraulic fluid tank 53 by the hydraulic pump 51 for actuation flows. The second suction fluid passage 64 is a flow passage through which the hydraulic fluid sucked from the hydraulic fluid tank 53 by the hydraulic pump 52 for control flows.

The first fluid passage 61 is a flow passage through which the hydraulic fluid delivered by the hydraulic pump 51 for actuation flows toward the controlling valves V1 to V8 of the control valve V. The first fluid passage 61 branch into a plurality of fluid passages in the control valve V, which are connected to the controlling valves V1 to V8.

The second fluid passage 62 is a flow passage through which the hydraulic fluid that has passed the controlling valves V1 to V8 flows toward the hydraulic fluid tank 53. The hydraulic fluid tank 53 stores the hydraulic fluid. The second fluid passage 62 includes a reciprocating fluid passage 62a and a discharge fluid passage 62b.

A plurality of reciprocating fluid passages 62a are provided such that each of the controlling valves V1 to V8 and a corresponding one of the hydraulic actuators C1 to C5, ML, MR, and MT to be controlled are connected by a pair of two reciprocating fluid passages 62a. The reciprocating fluid passages 62a are flow passages through which the hydraulic fluid is supplied from the controlling valves V1 to V8 to the hydraulic actuators C1 to C5, ML, MR, and MT and the hydraulic fluid is returned from the hydraulic actuators C1 to C5, ML, MR, and MT to the controlling valves V1 to V8. One end of the discharge fluid passage 62b branch into a plurality of discharge fluid passages, which are connected to the controlling valves V1 to V8. The other end portion of the discharge fluid passage 62b is connected to the hydraulic fluid tank 53.

A part of the hydraulic fluid that has flown to any one of the controlling valves V1 to V8 through the first fluid passage 61 passes the one of the controlling valves V1 to V8, passes through one of the reciprocating fluid passages 62a, and is supplied to a corresponding one of the hydraulic actuators C1 to C5, ML, MR, and MT to be controlled. Then, the hydraulic fluid discharged from the corresponding one of the hydraulic actuators C1 to C5, ML, MR, and MT returns to the connected one of the controlling valves V1 to V8 by passing through the other one of the reciprocating fluid passages 62a passes the one of the controlling valves V1 to V8 and flows to the discharge fluid passage 62b.

The other portion of the hydraulic fluid that has flown to any one of the controlling valves V1 to V8 by passing through the first fluid passage 61 passes the one of the controlling valves V1 to V8, flows to the discharge fluid passage 62b, and returns to the hydraulic fluid tank 53 without being supplied to the hydraulic actuators C1 to C5, ML, MR, and MT. As described above, the fluid passages 61, 62, and 63 are provided such that the hydraulic fluid circulates through the hydraulic fluid tank 53, the hydraulic pump 51, and the controlling valves V1 to V8 of the control valve V, (a part of the hydraulic fluid also circulates through the hydraulic actuators C1 to C5, ML, MR, and MT).

The third fluid passage 65 is a flow passage through which the hydraulic fluid delivered by the hydraulic pump 52 for control flows to the operation valves PV1 to PV6. One end portion of the third fluid passage 65 is connected to the hydraulic pump 52 for control, and the other end of the third fluid passage 65 branches into a plurality of fluid passages, which are connected to primary-side ports (primary ports) of the operation valves PV1 to PV6.

Although a case where the operation valves PV1 to PV6 and the controlling valves V1 to V8 are provided in the hydraulic circuit K and the operation valves PV1 to PV6 adjust the pilot oil that acts on the controlling valves V1 to V8 when the operation levers are operated has been described as an example in the above embodiment, the controlling valves V1 to V8 may adjust the hydraulic fluid supplied to the hydraulic actuators C1 to C5, ML, MR, and MT to be controlled based on an instruction signal from the controller 30. In this case, the controller 30 acquires an operation signal from the operation levers and outputs an instruction signal to the controlling valves V1 to V8 based on the operation signal.

Next, control of the electric motor 46 performed by the controller 30 is described. The controller 30 controls a rotational speed (motor rotational speed) R of the electric motor 46 in accordance with operation of a rotational speed operation actuator (accelerator dial) 36.

As illustrated in FIG. 1, the electric working machine 1 includes the rotational speed operation actuator 36. The rotational speed operation actuator 36 is an operation member for operating the motor rotational speed R. As illustrated in FIG. 1, the rotational speed operation actuator 36 is connected to the controller 30 and outputs an operation signal to the controller 30. The rotational speed operation actuator 36 is, for example, a dial-type switch such as a selector switch having a plurality of switch positions, and a target value (target rotational speed) Rt of the motor rotational speed R is allocated to each of the plurality of switch positions. The rotational speed operation actuator 36 can set the target rotational speed Rt of the electric motor 46 within a predetermined range. In the present embodiment, the rotational speed operation actuator 36 can be operated to set the target rotational speed Rt within a range of 1000 rpm/min to 2200 rpm/min.

Although the rotational speed operation actuator 36 is a selector switch in the above example, the rotational speed operation actuator 36 may be a pedal type, a lever type, or the like as long as at least the target rotational speed Rt can be operated. The range of the target rotational speed Rt of the electric motor 46 that is operated by the rotational speed operation actuator 36 is not limited to the range of 1000 rpm/min to 2200 rpm/min. A minimum value Rt1 of the target rotational speed Rt that can be operated by the rotational speed operation actuator 36 is preferably defined to a lower limit value of the rotational speed R of the electric motor 46 for performing work by the working devices 20 and 10. The lower limit value is defined to a rotational speed R of the electric motor 46 in a non-load state that can instantly actuate the working devices 20 and 10 in accordance with operation of the operation levers.

As illustrated in FIG. 1, a rotational speed detector 35a that detects an actual rotational speed Ra of the electric motor 46 is connected to the controller 30, and the controller 30 controls the rotational speed R of the electric motor 46 based on the actual rotational speed Ra detected by the rotational speed detector 35a and the target rotational speed Rt operated by the rotational speed operation actuator 36. The rotational speed detector 35a is a sensor, an encoder, a pulse generator, or the like that detects the actual rotational speed Ra. The controller 30 calculates the actual rotational speed Ra based on a detection signal input from the rotational speed detector 35a.

The controller 30 transmits an instruction signal to the inverter 45 based on the calculated actual rotational speed Ra and the operation signal output from the rotational speed operation actuator 36. The inverter 45 changes the motor rotational speed R of the electric motor 46 by adjusting a frequency and a voltage of electric power supplied to the electric motor 46 in accordance with the instruction signal output from the controller 30. Specifically, the controller 30 controls drive of the electric motor 46 by the inverter 45 such that the actual rotational speed Ra detected by the rotational speed detector 35a matches the target rotational speed Rt.

The controller 30 controls the inverter 45 by transmitting an instruction signal to the inverter 45, and thus controls (restricts) output torque T of the electric motor 46 in accordance with a mode in addition to the motor rotational speed R. The controller 30 controls actual output torque (actual torque) Ta of the electric motor 46 to a value equal to or less than a predetermined upper limit value (first upper limit value) Tr. Furthermore, the controller 30 can be switched between a first mode (normal mode) and a second mode (energy-saving mode). The first mode is a mode in which work efficiency of the working devices 20 and 10 is given priority, and the second mode is a mode in which electric power consumed by drive of the electric motor 46 is reduced.

As illustrated in FIG. 1, the electric working machine 1 includes a mode switch 37 for performing an operation of switching the mode, and the controller 30 switches the mode in accordance with the operation of the mode switch 37. The mode switch 37 is connected to the controller 30 and outputs an operation signal to the controller 30. The mode switch 37 is a push-button switch (tactile switch) that is operated by pressing, a slide switch that is operated by sliding, a dial-type switch (dial switch) such as a selector switch having a plurality of switch positions, a display image displayed on a display (not illustrated), or the like. For example, in the case where the mode switch 37 is a tactile switch, the mode switch 37 outputs an operation signal to the controller 30 when pressed, and the controller 30 switches the mode every time the mode switch 37 is operated based on the operation signal.

The controller 30 controls the electric motor 46 such that a relationship between the actual rotational speed Ra and the first upper limit value Tr satisfies a predetermined map (restriction map) in accordance with the mode selected by the mode switch 37. The restriction map shows a relationship between the actual rotational speed Ra within a predetermined range and the first upper limit value Tr, and includes a line showing the first upper limit value Tr with respect to the actual rotational speed Ra.

The range of the actual rotational speed Ra whose relationship with the first upper limit value Tr is defined on the restriction map is preferably within the range of the target rotational speed Rt operated by the rotational speed operation actuator 36. That is, a lower limit value Ra1 of the range of the actual rotational speed Ra defined by the restriction map is equal to or greater than a minimum value Rt1 of the range of the target rotational speed Rt, and an upper limit value Ra2 of the range of the actual rotational speed Ra defined by the restriction map is equal to or less than a maximum value Rt2 of the range of the target rotational speed Rt.

In the case where the target rotational speed Rt is outside the range of the actual rotational speed Ra defined by the restriction map, the controller 30 controls the motor rotational speed R within the range of the actual rotational speed Ra defined by the restriction map. That is, in the case where the target rotational speed Rt is higher than the upper limit value Ra2, the controller 30 controls the rotational speed of the electric motor 46 by using the upper limit value Ra2, and in the case where the target rotational speed Rt is lower than the lower limit value Ra1, the controller 30 controls the rotational speed of the electric motor 46 by using the lower limit value Ra1.

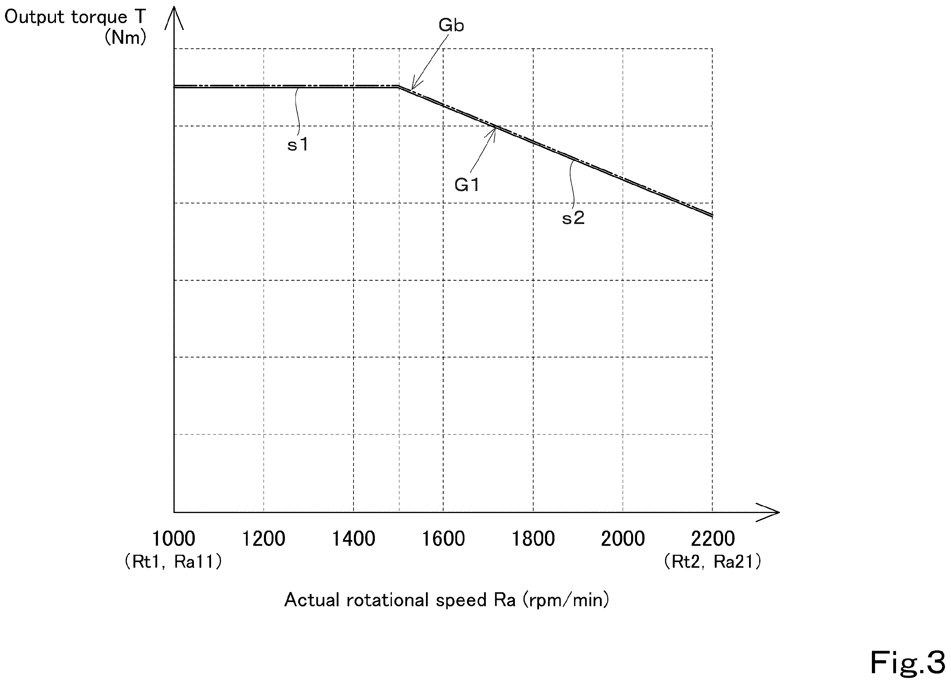

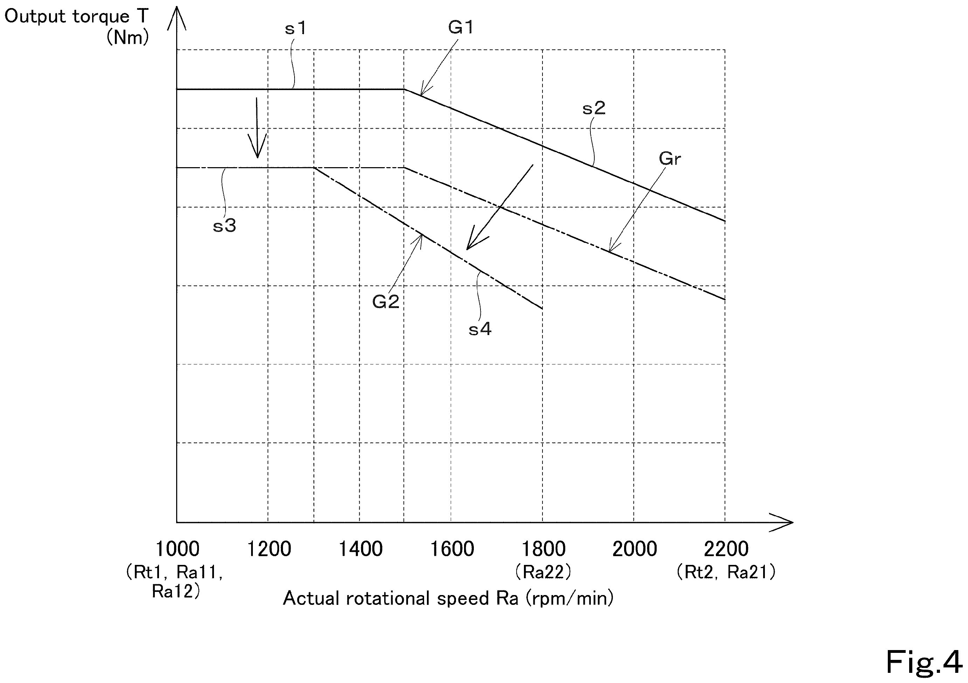

The restriction map includes a first map and a second map, and in the first mode, the controller 30 controls the electric motor 46 such that the first map is satisfied. In the second mode, the controller 30 controls the electric motor 46 such that the second map is satisfied. FIG. 3 shows graphs to explain an example of the first map, and FIG. 4 shows graphs to explain an example of the second map.

In FIGS. 3 and 4, the horizontal axis represents the actual rotational speed Ra of the electric motor 46, and the vertical axis represents the output torque T of the electric motor 46. Of the graphs of FIG. 3, a line G1 illustrated as a solid line is a first line G1 showing the first upper limit value Tr with respect to the actual rotational speed Ra on the first map, and a line illustrated as a line with alternate long and two short dashes is a reference line Gb showing maximum torque with respect to a rotational speed of an engine. As illustrated in FIG. 3, the relationship between the actual rotational speed Ra and the first upper limit value Tr corresponding to the first map is one that is approximated to rotational speed torque characteristics of an engine of an existing working machine in which not the electric motor 46, but an engine is mounted.

As illustrated in FIG. 3, the first line G1 includes a portion where the first upper limit value Tr decreases at least as the actual rotational speed Ra increases. Specifically, the first line G1 illustrated in FIG. 3 includes a first section s1 and a second section s2. The first section s1 is a section where the first upper limit value Tr is constant with respect to the actual rotational speed Ra. The first section s1 is a section where the actual rotational speed Ra is equal to or greater than 1000 rpm/min and less than 1500 rpm/min.

The second section s2 is a portion where the first upper limit value Tr decreases at least as the actual rotational speed Ra increases, and the first upper limit value Tr is proportional to the actual rotational speed Ra in the second section s2. Accordingly, in the case where the actual rotational speed Ra is in the second section s2, the first upper limit value Tr substantially linearly decreases as the actual rotational speed Ra increases, and substantially linearly increases as the actual rotational speed Ra decreases. The second section s2 is a section where the actual rotational speed Ra is equal to or greater than 1500 rpm/min and equal to or less than 2200 rpm/min.

The first map is defined such that the actual rotational speed Ra is equal to or less than a second upper limit value Ra21. Specifically, as illustrated in FIG. 3, the range of the actual rotational speed Ra whose relationship with the first upper limit value Tr is defined on the first map matches the range of the target rotational speed Rt that is operated by the rotational speed operation actuator 36. That is, a lower limit value (second lower limit value) Ra11 of the range of the actual rotational speed Ra defined on the first map is the minimum value Rt1 (1000 rpm/min) of the target rotational speed Rt, and the upper limit value (second upper limit value) Ra21 of the range of the actual rotational speed Ra defined on the first map is the maximum value Rt2 (2200 rpm/min) of the target rotational speed Rt.

Note that the first map illustrated in FIG. 3 is an example and is not limited to this. The first map preferably shows a relationship between a rotational speed and maximum torque of an engine, and the first map preferably includes a portion where the first upper limit value Tr decreases as the actual rotational speed Ra increases, but, for example, the first upper limit value Tr may be constant with respect to the actual rotational speed Ra.

Of the graphs of FIG. 4, a line G1 illustrated as a solid line is the first line G1 showing the first upper limit value Tr with respect to the actual rotational speed Ra on the first map, and a line G2 illustrated as a line with alternate long and short dashes is a second line G2 showing the first upper limit value Tr with respect to the actual rotational speed Ra on the second map. A line Gr illustrated as a line with alternate long and two short dashes is a line for explanation (reference line) Gr obtained by decreasing the first upper limit value Tr corresponding to the actual rotational speed Ra on the first map by a predetermined value. For convenience of description, hereinafter, a map that includes the reference line Gr is sometimes referred to as a reference map, and a case where the controller 30 performs control based on the reference map is sometimes referred to as a reference mode.

As indicated by the first line G1 and the second line G2 in FIG. 4, the first upper limit value Tr at a certain actual rotational speed Ra on the second map is set smaller than the first upper limit value Tr at the same actual rotational speed Ra on the first map. As is clear from comparison between the second line G2 and the reference line Gr in FIG. 4, a difference between the first upper limit value Tr on the first map and the first upper limit value Tr on the second map is set (defined) to become larger as the actual rotational speed Ra increases.

The second map is defined by reducing the first map, and the second line G2 includes a shape obtained by reducing the first line G1 in a direction in which the actual rotational speed Ra and the first upper limit value Tr decrease. The second map is defined by reducing the first map in a direction in which the actual rotational speed Ra approaches the minimum value Rt1 of the target rotational speed Rt and in a direction in which the first upper limit value Tr approaches zero. That is, in the case where the first map and the second map are defined by a function of the actual rotational speed Ra and the first upper limit value Tr, the function of the second map is defined by substituting, for a variable "Ra" of the actual rotational speed Ra of the function of the first map, a mathematical expression in which a value obtained by subtracting the minimum value "Rt1" of the target rotational speed Rt from a variable "Ra" of the actual rotational speed Ra of the second map is divided by a reduction rate m1 of the actual rotational speed Ra and the minimum value Rt1 of the target rotational speed Rt is added thereto, and substituting, for a variable "Tr" of the first upper limit value Tr of the first map, a mathematical expression in which a variable "Tr" of the first upper limit value Tr of the second map is divided by a reduction rate m2 of the first upper limit value Tr. That is, in the case where the function of the first map is expressed by the equation (1), the function of the second map can be expressed by the equation (2).

[Math. 1]

$$T_r = f(R_a) \qquad\qquad \cdots (1)$$

$$\frac{T_r}{m_2} = f\left(\frac{R_a - R_{t1}}{m_1} + R_{t1}\right) \qquad\qquad \cdots (2)$$

In the present embodiment, on the second map illustrated in FIG. 4, the reduction rate m1 is 60%, and the reduction rate m2 is 90%. Accordingly, the second line G2 includes a shape obtained by reducing the first line G1 by 60% in a direction the actual rotational speed Ra approaches the minimum value Rt1 of the target rotational speed Rt and reducing the first line G1 by 90% in a direction in which the first upper limit value Tr approaches zero.

As with the first line G1, the second line G2 includes a portion where the first upper limit value Tr decreases at least as the actual rotational speed Ra increases. Specifically, the line of the second map illustrated in FIG. 4 includes a third section s3 and a fourth section s4. The third section s3 is a section where the first upper limit value Tr is constant with respect to the actual rotational speed Ra. The third section s3 is a section where the actual rotational speed Ra is equal to or greater than 1000 rpm/min and less than 1300 rpm/min.

The fourth section s4 is a portion where the first upper limit value Tr decreases at least as the actual rotational speed Ra increases, and the first upper limit value Tr is proportional to the actual rotational speed Ra. Accordingly, in the case where the actual rotational speed Ra is in the fourth section s4, the first upper limit value Tr substantially linearly decreases as the actual rotational speed Ra increases, and substantially linearly increases as the actual rotational speed Ra decreases. Since the function of the second map is defined by reducing the function of the first map in a direction in which the actual rotational speed Ra and the first upper limit value Tr decrease, an absolute value of a slope of the function of the fourth section s4 is larger than an absolute value of a slope of the function of the second section s2, as illustrated in FIG. 4. The fourth section s4 is a section where the actual rotational speed Ra is equal to or greater than 1300 rpm/min and equal to or less than 1800 rpm/min.

As illustrated in FIG. 4, the second map is defined such that the actual rotational speed Ra is equal to or less than a third upper limit value Ra22. The third upper limit value Ra22 is smaller than the second upper limit value Ra21. Accordingly, in the second mode, the controller 30 controls an upper limit value of the rotational speed of the electric motor 46 to a lower value than in the first mode. Specifically, as illustrated in FIG. 4, a lower limit value (third lower limit value Ra12) of the range of the actual rotational speed Ra defined by the second map is Rt1 (1000 rpm/min), and the upper limit value (third upper limit value Ra22) of the range of the actual rotational speed Ra defined by the map is 1800 rpm/min.

Although the second map is generated by reducing the first map, the above second map is an example, and the reduction rates may be changeable. In this case, the reduction rates m1 and m2 may be changed to any values by operating an input device (e.g., a display, not illustrated) for inputting information that is connected to the controller 30.

The storing device 31 stores the first map and the second map therein, and the controller 30 acquires the first map or the second map in accordance with the mode and controls the output torque T by outputting an instruction signal to the inverter 45 based on the acquired map and the actual rotational speed Ra. In a method for controlling the electric working machine 1 according to the present embodiment, the controller 30 controls the electric motor 46 by selectively using the first map or the second map. In the case where the mode is switched to the first mode by the mode switch 37, the controller 30 acquires the first map from the storing device 31. On the other hand, in the case where the mode is switched to the second mode by the mode switch 37, the controller 30 acquires the second map from the storing device 31. The controller 30 acquires the first upper limit value Tr corresponding to the actual rotational speed Ra based on the actual rotational speed Ra detected by the rotational speed detector 35a and the acquired control map.

The controller 30 acquires an actual current value Ia of electric power that is being supplied from the inverter 45 to the electric motor 46. Then, the controller 30 calculates an actual measurement value (actual torque) Ta of the output torque T of the electric motor 46 based on the acquired actual current value Ia and a voltage of the electric power that is being supplied to the electric motor 46, and controls the motor rotational speed R such that the actual torque Ta is equal to or less than the first upper limit value Tr. That is, the controller 30 controls the inverter 45 such that the actual rotational speed Ra matches the target rotational speed Rt unless the actual torque Ta exceeds the first upper limit value Tr.

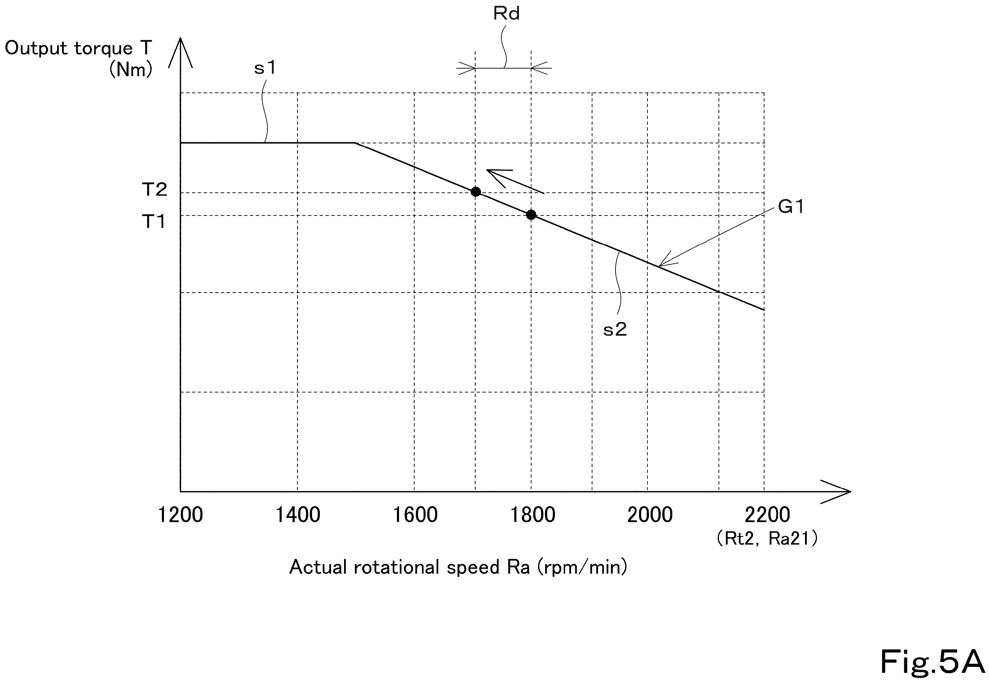

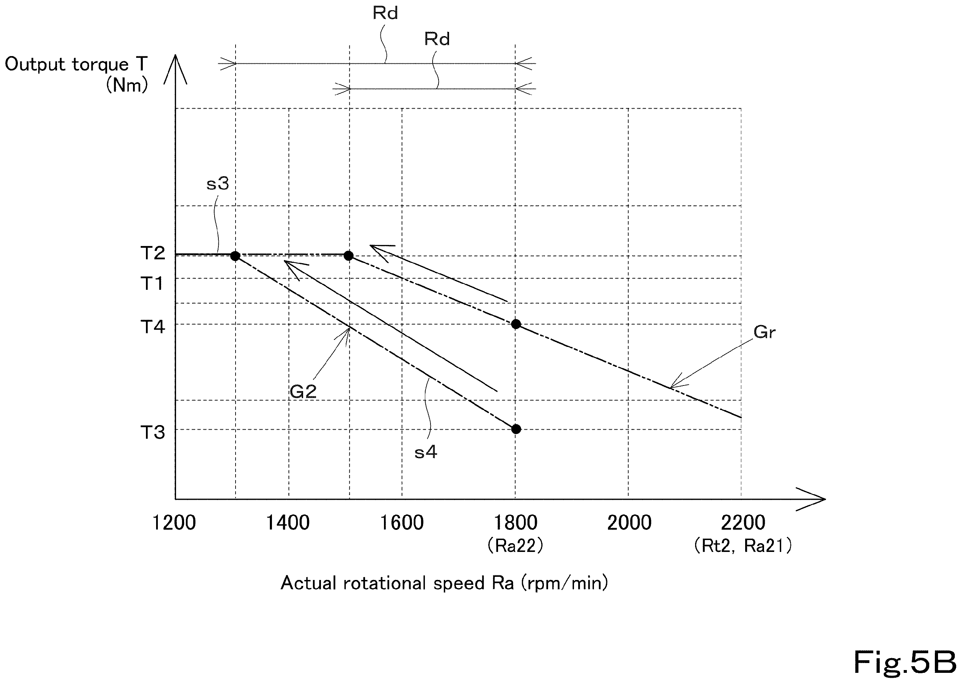

When requested torque (load torque) T1, which is the output torque T requested in accordance with an operation performed on the working machine manual operator 5, exceeds the actual torque Ta in the case where the working devices 20 and 10 concurrently operate or the electric working machine 1 goes up a slope, the actual rotational speed Ra decreases. A difference value (drop rotational speed) Rd obtained by subtracting the actual rotational speed Ra from the target rotational speed Rt is thus generated, and the controller 30 controls the electric motor 46 such that the actual torque Ta does not exceed the first upper limit value Tr. In the case where the requested torque T1 is higher than the first upper limit value Tr corresponding to the actual rotational speed Ra at the time, the controller 30 decreases the rotational speed of the electric motor 46 to the actual rotational speed Ra at which the first upper limit value Tr is equal to or greater than the requested torque Tl. The drop rotational speed Rd is thus generated. An example of the drop rotational speed Rd in each mode is described below with reference to FIGS. 5A and 5B.

FIG. 5A illustrates a case where the requested torque T1 is higher than the first upper limit value Tr in the first mode, and FIG. 5B illustrates a case where the requested torque T1 is higher than the first upper limit value Tr in the second mode. FIGS. 5A and 5B illustrate a case where the requested torque T1 becomes output torque T2 in a state where the controller 30 is controlling the electric motor 46 at 1800 rpm/min. In FIGS. 5A and 5B, the horizontal axis represents the actual rotational speed Ra of the electric motor 46, and the vertical axis represents the output torque T of the electric motor 46.

In FIG. 5A, a line illustrated as a solid line is the first line G1. As illustrated in FIG. 5A, in the first mode, in the case where the controller 30 is controlling the electric motor 46 at 1800 rpm/min, the first upper limit value Tr is the output torque T1. The output torque T1 is lower than the output torque T2 (T1 < T2). On the first line G1, the actual rotational speed Ra corresponding to the output torque T2 is 1700 rpm/min, and therefore a drop rotational speed Rd of 100 rpm/min is generated.

In FIG. 5B, a line illustrated as a line with alternate long and short dashes is the second line G2, and a line illustrated as a line with alternate long and two short dashes is the reference line Gr. As illustrated in FIG. 5B, on the second line G2, the first upper limit value Tr is the output torque T3 in the case where the controller 30 is controlling the electric motor 46 at 1800 rpm/min. The output torque T3 is lower than the output torque T1 and the output torque T2 (T3 < T1 < T2). On the second map, the actual rotational speed Ra corresponding to the output torque T2 is 1300 rpm/min, and therefore a drop rotational speed Rd of 500 rpm/min is generated.

Furthermore, assuming a case where the maximum value of the range of the actual rotational speed Ra defined by the first map is restricted to 1800 rpm/min as in an existing energy-saving mode, a drop rotational speed Rd of 100 rpm/min is generated in the energy-saving mode.

Furthermore, assuming a case where the controller 30 controls the output torque T of the electric motor 46 based on the reference line Gr, the first upper limit value Tr is output torque T4 in the case where the controller 30 is controlling the electric motor 46 at 1800 rpm/min on the reference line Gr. The output torque T4 is higher than the output torque T3 and is lower than the output torque T1 and the output torque T2 (T3 < T4 < T1 < T2). On the reference line Gr, the actual rotational speed Ra corresponding to the output torque T2 is 1500 rpm/min, and therefore a drop rotational speed Rd of 300 rpm/min is generated.

As described above, the first upper limit value Tr at a certain actual rotational speed Ra on the second map is smaller than the first upper limit value Tr at the same actual rotational speed Ra on the first map, and a difference between the first upper limit value Tr on the first map and the first upper limit value Tr on the second map is set to become larger as the actual rotational speed Ra increases. Therefore, in the case where the controller 30 drives the electric motor 46 at the same actual rotational speed Ra and the same requested torque T1 is used in the first mode and the second mode, the drop rotational speed Rd is larger in the second mode than in the first mode.

Although the drop rotational speed Rd in the first mode and the drop rotational speed Rd in the existing energy-saving mode are the same, the drop rotational speed Rd is higher in the second mode than in the existing energy-saving mode.

Furthermore, the drop rotational speed Rd is higher in the second mode than in the reference mode.

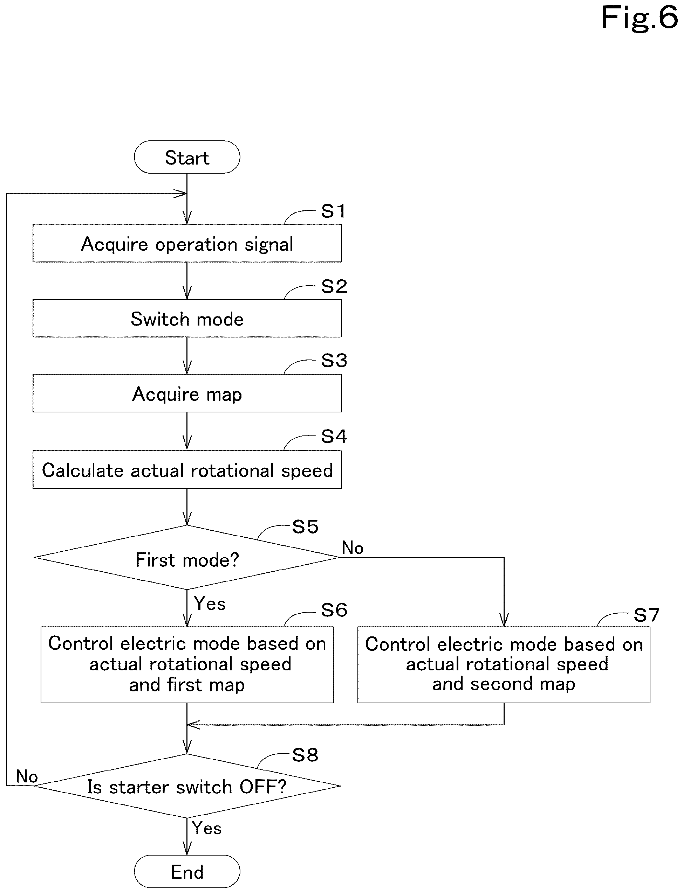

A flow of a series of processes of control of the motor rotational speed R performed by the controller 30 is described below with reference to FIG. 6. FIG. 6 illustrates a flow of a series of processes of control of the electric motor 46 performed by the controller 30. The series of processes illustrated in FIG. 6 is performed by a CPU based on a software program stored in advance in the memory of the controller 30. FIG. 6 illustrates a state where the electric motor 46 is being driven, that is, a state where the starter switch 32 is ON. When the starter switch 32 is turned ON by the user, the controller 30 starts the electric motor 46 by the inverter 45. The controller 30 acquires an operation signal output from the mode switch 37 (S1). The controller 30 switches the mode in accordance with the operation signal (S2). In S2, the mode is not switched in the case where the mode switch 37 is not operated.

The controller 30 acquires a map (restriction map) from the storing device 31 in accordance with the current mode (S3). The controller 30 calculates the actual rotational speed Ra from a detection signal detected by the rotational speed detector 35a (S4).

In the case where the mode is the first mode (S5, Yes), the controller 30 controls the electric motor 46 based on the actual rotational speed Ra and the acquired first map such that a relationship between the actual rotational speed Ra and the first upper limit value Tr satisfies the first map (S6, first step). On the other hand, in the case where the mode is the second mode (S5, No), the controller 30 controls the electric motor 46 based on the actual rotational speed Ra and the acquired second map such that the relationship between the actual rotational speed Ra and the first upper limit value Tr satisfies the second map (S7, second step).

The controller 30 ends the series of processes in the case where the starter switch 32 is turned OFF (S8, Yes), whereas the controller 30 returns to the process in S1 in the case where the starter switch 32 is not turned OFF (S8, No). As described above, according to the method for controlling the electric working machine 1 according to the present embodiment, the controller 30 controls the electric motor 46 by selectively using the first map or the second map.

Note that although the upper limit value (the third upper limit value Ra22) of the range of the actual rotational speed Ra defined by the second map is preferably smaller than the upper limit value (the second upper limit value Ra21) of the range of the actual rotational speed Ra defined by the second map in the above embodiment, this is not restrictive, and the third upper limit value Ra22 may be identical to the second upper limit value Ra21.

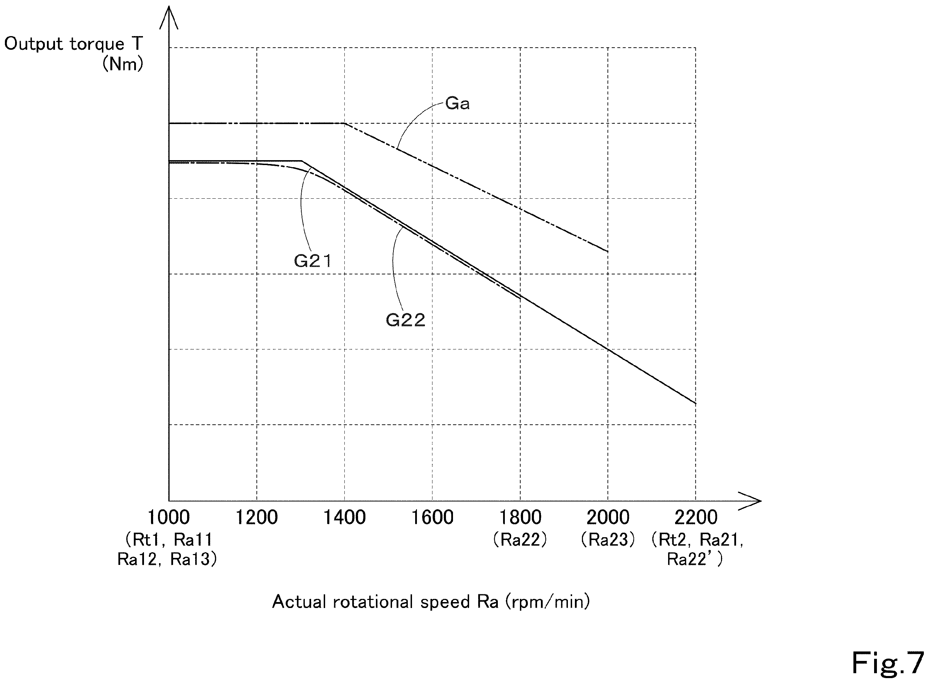

FIG. 7 shows graphs to explain the second map according to a variation. Of the graphs of FIG. 7, a line G21 illustrated as a solid line is a second line G21 according to a first variation of the second map, and a third upper limit value Ra22' of the second map is defined as being identical to the second upper limit value Ra21 (2200 rpm/min) of the first map and is also identical to the maximum value Rt2 of the target rotational speed Rt.

Although the second line G2 formed by the second map includes the third section s3 and the fourth section s4 and is bent between the third section s3 and the fourth section s4 (at the actual rotational speed Ra of 1300 rpm/min) in the above embodiment as illustrated in FIG. 4, the second line G2 may include a curve or may be formed of a curve instead of being formed of a straight line only. Of the graphs of FIG. 7, a line G22 illustrated as a line with alternate long and short dashes is a second line G22 according to a second variation of the second map, and the second line G22 is curved between the third section s3 and the fourth section s4.

Although the controller 30 can be switched between the first mode and the second mode and controls the output torque T of the electric motor 46 in accordance with the mode in the above embodiment, the modes between which the controller 30 can be switched are not limited to the two modes (the first mode and the second mode) and can be three or four modes. Of the graphs of FIG. 7, a line Ga illustrated as a line with alternate long and two short dashes is a line (additional line) Ga showing a relationship between the actual rotational speed Ra and the first upper limit value Tr of the electric motor 46 corresponding to a map (additional map) of a third mode different from the first mode and the second mode.

**In** the additional map of the third mode illustrated in FIG. 7, the reduction rate m1 is 80%, and the reduction rate m2 is 95%. Accordingly, the additional line Ga includes a shape obtained by reducing the first line G1 by 80% in a direction in which the actual rotational speed Ra approaches the minimum value Rt1 of the target rotational speed Rt and reducing the first line G1 by 95% in a direction in which the first upper limit value Tr approaches zero. As illustrated in FIG. 7, the additional map is defined such that the actual rotational speed Ra is equal to or greater than a fourth lower limit value R13 (1000 rpm/min) and equal to or less than a fourth upper limit value R23 (2000 rpm/min).

Although the second map is preferably generated by reducing the first map, the second map need not be generated by reducing the first map, and it is only necessary that the first upper limit value Tr at a certain actual rotational speed Ra on the second map is smaller than the first upper limit value Tr at the same actual rotational speed Ra on the first map and a difference between the first upper limit value Tr on the first map and the first upper limit value Tr on the second map becomes larger as the actual rotational speed Ra increases. In this case, the first map may be defined such that the first upper limit value Tr is constant with respect to the actual rotational speed Ra.

Although the controller 30 acquires a restriction map (the first map or the second map) from the storing device 31 in accordance with the mode and controls the electric motor 46 such that the relationship between the actual rotational speed Ra and the first upper limit value Tr satisfies the control map in the above embodiment, the controller 30 need not acquire the control map itself to control the electric motor 46, as long as at least the relationship between the actual rotational speed Ra and the first upper limit value Tr satisfies the control map. That is, the controller 30 may acquire a map different from the restriction map (the first map or the second map) and control the electric motor 46 based on this map such that the relationship between the actual rotational speed Ra and the first upper limit value Tr satisfies the control map.

For example, the storing device 31 may store a map (first conversion map) obtained by converting the first upper limit value Tr (output torque T) of the control map into the output power P (power restriction value Pr) of the electric motor 46, and the controller 30 may control the electric motor 46 based on the first conversion map such that the relationship between the actual rotational speed Ra and the first upper limit value Tr satisfies the control map. The first upper limit value Tr can be converted into the power restriction value Pr by dividing a product of the first upper limit value Tr and the actual rotational speed Ra by a constant (a value obtained by dividing pi $\pi$ by 30). The controller 30 controls the electric motor 46 such that the actual output power P (actual output power Pa) of the electric motor 46 is equal to or less than the power restriction value Pr.

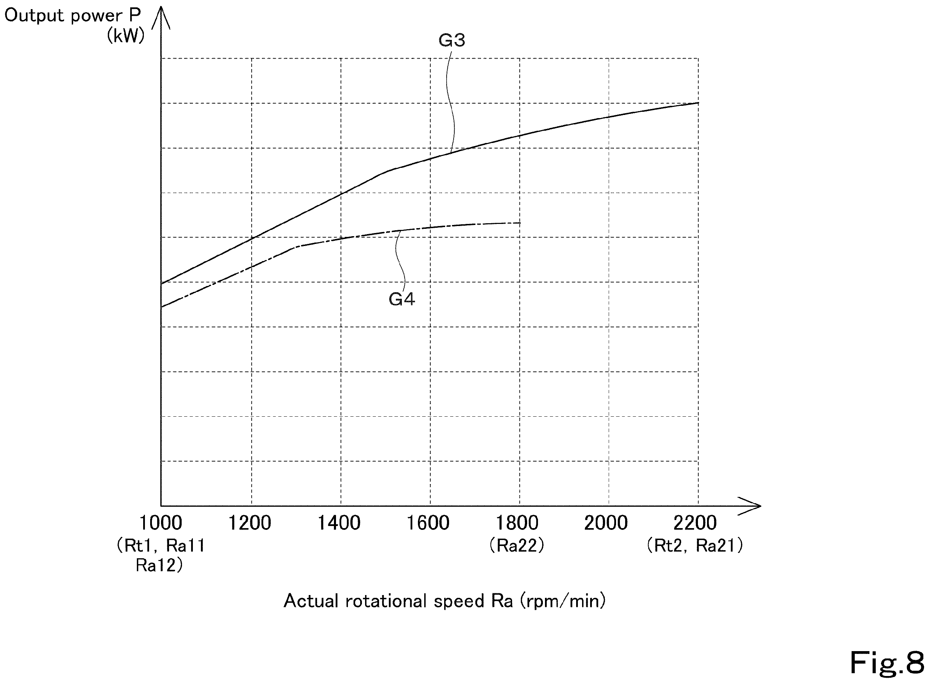

FIG. 8 shows graphs to explain a third map obtained by converting the first map illustrated in FIG. 3 and a fourth map obtained by converting the second map illustrated in FIG. 4. Of the graphs of FIG. 8, a line G3 illustrated as a solid line is a third line G3 showing a relationship between the actual rotational speed Ra and the power restriction value Pr of the electric motor 46 corresponding to the third map, and a line G4 illustrated as a line with alternate long and short dashes is a fourth line G4 showing a relationship between the actual rotational speed Ra and the power restriction value Pr of the electric motor 46 corresponding to the fourth map. The first conversion map shows a relationship between the actual rotational speed Ra and the output power P (power restriction value Pr) within a predetermined range, and includes a line showing the power restriction value Pr with respect to the actual rotational speed Ra.

The controller 30 acquires the third map or the fourth map in accordance with the mode and controls the output torque T by outputting an instruction signal to the inverter 45 based on the acquired first conversion map and the actual rotational speed Ra. In the case where the mode is switched to the first mode by the mode switch 37, the controller 30 acquires the third map from the storing device 31. On the other hand, in the case where the mode is switched to the second mode by the mode switch 37, the controller 30 acquires the fourth map from the storing device 31. The controller 30 acquires the power restriction value Pr corresponding to the actual rotational speed Ra based on the actual rotational speed Ra detected by the rotational speed detector 35a and the acquired first conversion map.

Furthermore, the controller 30 acquires the actual current value Ia of the electric power that is being supplied from the inverter 45 to the electric motor 46. Then, the controller 30 calculates an actual measurement value (actual output power Pa) of the output power P of the electric motor 46 based on the acquired actual current value Ia, a voltage of the electric power that is being supplied to the electric motor 46, and the actual rotational speed Ra, and controls the motor rotational speed R such that the actual output power Pa is equal to or less than the power restriction value Pr. The controller 30 thus controls the inverter 45 such that the actual rotational speed Ra matches the target rotational speed Rt unless the actual torque Ta exceeds the first upper limit value Tr.

The storing device 31 may store a map (second conversion map) obtained by converting the first upper limit value Tr of the control map into a current value I (e.g., an effective value, current restriction value Ir) of electric power supplied to the electric motor 46, and the controller 30 may control the electric motor 46 based on the second conversion map such that the relationship between the actual rotational speed Ra and the first upper limit value Tr satisfies the control map. The first upper limit value Tr can be converted into the current restriction value Ir by converting the first upper limit value Tr into the power restriction value Pr and then dividing the power restriction value Pr by the voltage of the electric power supplied to the electric motor 46. The controller 30 controls the electric motor 46 such that the current value I of the electric power supplied to the electric motor 46 becomes equal to or less than the current restriction value Ir.

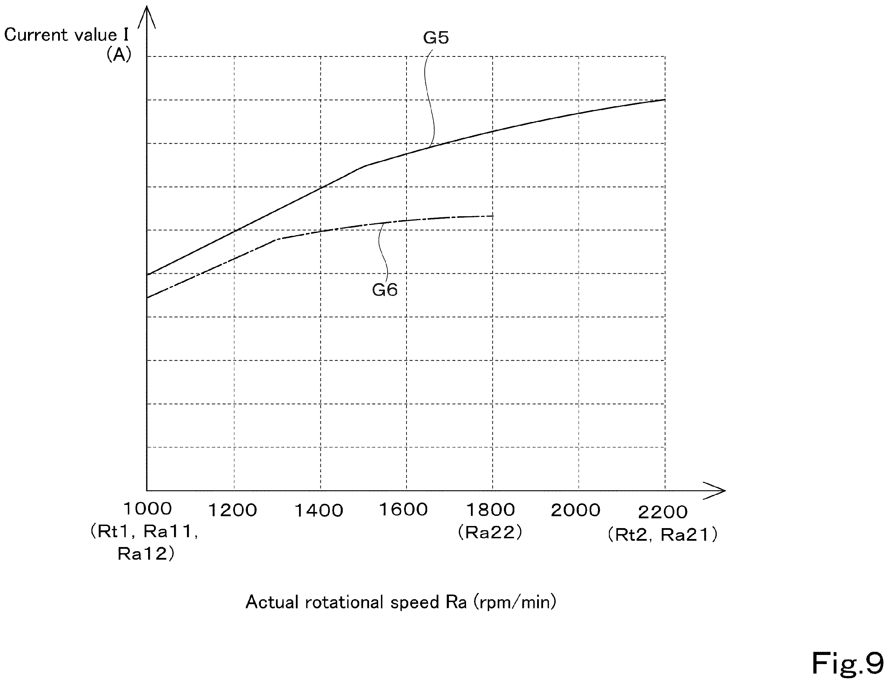

FIG. 9 shows graphs to explain a fifth map obtained by converting the first map illustrated in FIG. 3 and a sixth map obtained by converting the second map illustrated in FIG. 4. Of the graphs of FIG. 8, a line G5 illustrated as a solid line is a fifth line G5 showing a relationship between the actual rotational speed Ra and the current restriction value Ir of the electric motor 46 corresponding to the fifth map, and a line G6 illustrated as a line with alternate long and short dashes is a sixth line G6 showing a relationship between the actual rotational speed Ra and the current restriction value Ir of the electric motor 46 corresponding to the sixth map. The second conversion map shows a relationship between the actual rotational speed Ra and the current restriction value Ir within a predetermined range, and includes a line showing the current restriction value Ir with respect to the actual rotational speed Ra.

The controller 30 acquires the fifth map or the sixth map in accordance with the mode and controls the output torque T by outputting an instruction signal to the inverter 45 based on the acquired second conversion map and the actual rotational speed Ra. In the case where the mode is switched to the first mode by the mode switch 37, the controller 30 acquires the fifth map from the storing device 31. On the other hand, in the case where the mode is switched to the second mode by the mode switch 37, the controller 30 acquires the sixth map from the storing device 31. The controller 30 acquires the current restriction value Ir corresponding to the actual rotational speed Ra based on the actual rotational speed Ra detected by the rotational speed detector 35a and the acquired second conversion map.

Furthermore, the controller 30 acquires the actual current value Ia of the electric power that is being supplied from the inverter 45 to the electric motor 46. Then, the controller 30 controls the motor rotational speed R such that the actual current value Ia of the electric power that is being supplied to the electric motor 46 becomes equal to or less than the current restriction value Ir. The controller 30 thus controls the inverter 45 such that the actual rotational speed Ra matches the target rotational speed Rt unless the actual torque Ta exceeds the first upper limit value Tr.

Although the controller 30 switches the mode in accordance with an operation of the mode switch 37 in the above embodiment, the controller 30 may switch the mode, for example, in accordance with a remaining battery level of the battery unit 40 (the battery pack 41). In this case, the controller 30 may maintain the first mode in the case where the remaining battery level of the battery pack 41 is equal to or higher than a predetermined level and may shift from the first mode to the second mode in the case where the remaining battery level becomes less than the predetermined level.

Although an electric working machine including the battery unit 40 that supplies electric power to the electric motor 46 has been described in the present embodiment, this is not restrictive, and electric power may be supplied from an external power source to the electric motor 46.

Example embodiments of the present invention provide electric working machines 1 and methods for controlling electric working machines 1 described in the following items.

(Item 1) An electric working machine 1 including an electric motor 46 to be driven by electric power, a rotational speed detector 35a to detect an actual rotational speed Ra of the electric motor 46, and a controller 30 to control a rotational speed and an output torque T of the electric motor 46, wherein the controller 30 is switchable between (i) a first mode in which the controller 30 controls the electric motor 46 such that a relationship between the actual rotational speed Ra and a first upper limit value Tr of the output torque T satisfies a first map and (ii) a second mode in which the controller 30 controls the electric motor 46 such that the relationship between the actual rotational speed Ra and the first upper limit value Tr of the output torque T satisfies a second map, and the first map and the second map are defined such that the first upper limit value Tr of the output torque T at a certain actual rotational speed Ra on the second map is smaller than the first upper limit value Tr of the output torque T at the same certain actual rotational speed Ra on the first map, and that a difference between the first upper limit value Tr on the first map and the first upper limit value Tr on the second map increases as the actual rotational speed Ra increases.

With the electric working machine 1 according to item 1, the controller 30 can reduce electric power consumed by the electric motor 46 being driven to a greater extent in the second mode than in the first mode, and thus can achieve a reduction in energy consumption of the electric working machine 1. Furthermore, in the case where the requested torque Tl requested for the electric motor 46 is higher than the first upper limit value Tr, a drop amount of the actual rotational speed Ra is greater in the second mode than in the first mode. This allows a user to know that the second mode is more energy-saving than the first mode and know the load applied to the electric motor 46.

(Item 2) The electric working machine 1 according to item 1, wherein the controller 30 is configured or programmed to control the output torque T at a value equal to or less than the first upper limit value Tr.

With the electric working machine 1 according to item 2, the controller 30 can reliably restrict the output torque T in both the first mode and the second mode.

(Item 3) The electric working machine 1 according to item 1 or 2, wherein the first map is defined such that the actual rotational speed Ra is equal to or less than a second upper limit value Ra21, the second map is defined such that the actual rotational speed Ra is equal to or less than a third upper limit value Ra22, and the third upper limit value Ra22 is smaller than the second upper limit value Ra21.

With the electric working machine 1 according to item 3, the controller 30 can prevent or reduce an increase in the actual rotational speed Ra of the electric motor 46 in the second mode compared to when in the first mode. This makes it possible to reduce electric power consumed by the electric motor 46 being driven, thus achieving a reduction in energy consumption.

(Item 4) The electric working machine 1 according to any one of items 1 to 3, wherein the first map includes a first line G1 showing the first upper limit value Tr versus the actual rotational speed Ra, the second map includes a second line G2 showing the first upper limit value Tr versus the actual rotational speed Ra, and the second line G2 includes a shape obtained by reducing the first line G1 in a direction in which the actual rotational speed Ra and the output torque T decrease.

With the electric working machine 1 according to item 4, the tendency of the actual rotational speed-torque characteristics of the electric motor 46 does not change before and after the switching between the first mode and the second mode performed by the controller 30.

This makes to possible to prevent or reduce the feeling of strangeness in operability of the electric working machine 1.

(Item 5) The electric working machine 1 according to item 4, wherein the first line G1 and the second line G2 each at least include a portion where the first upper limit value Tr decreases as the actual rotational speed Ra increases.

With the electric working machine 1 according to item 5, in the case where the requested torque Tl requested for the electric motor 46 is higher than the first upper limit value Tr, it is possible to eliminate or reduce the likelihood that the electric motor 46 will stop rotating and possible to continue driving the electric motor 46.

(Item 6) The electric working machine 1 according to any one of items 1 to 5, further including a working device 20, 10 to be actuated by power generated by the electric motor 46, and a working machine manual operator 5 to receive an operation relating to the working device 20, 10, wherein the controller 30 is configured or programmed to, in a case that a requested torque T1 which is an output torque T requested in response to an operation on the working machine manual operator 5 is higher than the first upper limit value Tr corresponding to the actual rotational speed Ra at a time of the operation, reduce the rotational speed of the electric motor 46 to the actual rotational speed Ra at which the first upper limit value Tr is equal to or greater than the requested torque T1.

With the electric working machine 1 according to item 6, in the case where the requested torque Tl is higher than the first upper limit value Tr, the electric motor 46 can generate the output torque T equal to or greater than the requested torque T1. It is therefore possible to eliminate or reduce the likelihood that the electric motor 46 will stop in the case where the requested torque Tl is higher than the first upper limit value Tr.

(Item 7) The electric working machine 1 according to any one of items 1 to 6, further including a battery unit 40 to supply electric power to the electric motor 46, an inverter 45 to adjust electric power supplied from the battery unit 40 to the electric motor 46, and a memory and/or a storing device 31 to store the first map and the second map, wherein the controller 30 is configured or programmed to control the output torque T by outputting an instruction signal to the inverter 45 based on the first map or the second map.

With the electric working machine 1 according to item 7, the controller 30 can more reliably prevent or reduce an increase in the actual rotational speed Ra of the electric motor 46 in the second mode than in the first mode.

(Item 8) The electric working machine 1 according to any one of items 1 to 6, further including a battery unit 40 to supply electric power to the electric motor 46, an inverter 45 to adjust electric power supplied from the battery unit 40 to the electric motor 46, and a memory and/or a storing device 31 to store (i) a third map which is obtained by converting the first upper limit value Tr of the first map into an output power P of the electric motor 46 and which shows a relationship between the actual rotational speed Ra and the output power P and (ii) a fourth map which is obtained by converting the first upper limit value Tr of the second map into the output power P and which shows a relationship between the actual rotational speed Ra and the output power P, wherein the controller 30 is configured or programmed to control the output torque T by outputting an instruction signal to the inverter 45 based on the third map or the fourth map.

With the electric working machine 1 according to item 8, the controller 30 can more reliably prevent or reduce an increase in the actual rotational speed Ra of the electric motor 46 in the second mode than in the first mode.

(Item 9) The electric working machine 1 according to any one of items 1 to 6, further including a battery unit 40 to supply electric power to the electric motor 46, an inverter 45 to adjust electric power supplied from the battery unit 40 to the electric motor 46, and a memory and/or a storing device 31 to store (i) a fifth map which is obtained by converting the first upper limit value Tr of the first map into a current value I of electric power supplied to the electric motor 46 and which shows a relationship between the actual rotational speed Ra and the current value I and (ii) a sixth map which is obtained by converting the first upper limit value Tr of the second map into the current value I and which shows a relationship between the actual rotational speed Ra and the current value I, wherein the controller 30 is configured or programmed to control the output torque T by outputting an instruction signal to the inverter 45 based on the fifth map or the sixth map.

With the electric working machine 1 according to item 9, the controller 30 can more reliably prevent or reduce an increase in the actual rotational speed Ra of the electric motor 46 in the second mode than in the first mode.

(Item 10) The electric working machine 1 according to any one of items 1 to 9, further including a mode switch 37 to be operated to switch the modes, wherein the controller 30 is configured or programmed to switch the modes in response to an operation of the mode switch 37.

With the electric working machine 1 according to item 10, the user can easily switch the mode between the first mode and the second mode by operating the mode switch 37. Therefore, the user can easily change whether to prioritize energy saving of the electric working machine 1 or prioritize work performance.

(Item 11) A method of controlling an electric working machine 1 including an electric motor 46, the method including controlling the electric motor 46 selectively using a first map that defines a relationship between an actual rotational speed Ra of the electric motor 46 and a first upper limit value Tr of an output torque T of the electric motor 46 or using a second map in which the first upper limit value Tr of the output torque T corresponding to each actual rotational speed Ra is smaller than that of the first map.

With the method of controlling an electric working machine 1 according to item 11, the controller 30 can reduce electric power consumed by the electric motor 46 being driven to a greater extent in the second mode than in the first mode, and thus can achieve a reduction in energy consumption of the electric working machine 1. Furthermore, in the case where the requested torque Tl requested for the electric motor 46 is higher than the first upper limit value Tr, a drop amount of the actual rotational speed Ra is larger in the second mode than in the first mode. This allows a user to know that the second mode is more energy-saving than the first mode and know the load applied to the electric motor 46.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

For example, although the controller 30 transmits, as an instruction signal, information including a frequency and a voltage to the inverter 45 in the above embodiments, the controller 30 may transmit, as an instruction signal, the target rotational speed Rt or the like to the inverter 45. In this case, the inverter 45 calculates a frequency, a voltage, and the like based on the instruction signal and the mode of the controller 30 and adjusts electric power supplied to the electric motor 46.

Reference Signs List

| | |
|---|---|
| 1 | electric working machine |
| 10 | traveling device (working device) |
| 20 | working device |
| 30 | controller |
| 31 | storing device |
| 35a | rotational speed detector |

| 37 | mode switch |
| 40 | battery unit |
| 45 | inverter |
| 46 | electric motor |
| G1 | first line (line) |
| G2 | second line (line) |
| I | current value |
| P | output power |
| Ra | actual rotational speed |
| Ra21 | second upper limit value |
| Ra22 | third upper limit value |
| T | output torque |
| T1 | requested torque |
| Tr | first upper limit value |

**Claims**

1. An electric working machine comprising:

   an electric motor to be driven by electric power;
   a rotational speed detector to detect an actual rotational speed of the electric motor; and
   a controller to control a rotational speed and an output torque of the electric motor; wherein
   the controller is switchable between (i) a first mode in which the controller controls the electric motor such that a relationship between the actual rotational speed and a first upper limit value of the output torque satisfies a first map and (ii) a second mode in which the controller controls the electric motor such that the relationship between the actual rotational speed and the first upper limit value of the output torque satisfies a second map; and
   the first map and the second map are defined such that the first upper limit value of the output torque at a certain actual rotational speed on the second map is smaller than the first upper limit value of the output torque at the same certain actual rotational speed on the first map, and that a difference between the first upper limit value on the first map and the first upper limit value on the second map increases as the actual rotational speed increases.

2. The electric working machine according to claim 1, wherein
   the controller is configured or programmed to control the output torque at a value equal to or less than the first upper limit value.

3. The electric working machine according to claim 2, wherein

   the first map is defined such that the actual rotational speed is equal to or less than a second upper limit value;
   the second map is defined such that the actual rotational speed is equal to or less than a third upper limit value; and
   the third upper limit value is smaller than the second upper limit value.

4. The electric working machine according to claim 3, wherein

   the first map includes a first line showing the first upper limit value versus the actual rotational speed;
   the second map includes a second line showing the first upper limit value versus the actual rotational speed; and
   the second line includes a shape obtained by reducing the first line in a direction in which the actual rotational speed and the output torque decrease.

5. The electric working machine according to claim 4, wherein
   the first line and the second line each at least include a portion where the first upper limit value decreases as the actual rotational speed increases.

6. The electric working machine according to claim 5, further comprising:

   a working device to be actuated by power generated by the electric motor; and
   a working machine manual operator to receive an operation relating to the working device; wherein
   the controller is configured or programmed to, in a case that a requested torque which is an output torque requested in response to an operation on the working machine manual operator is higher than the first upper limit value corresponding to the actual rotational speed at a time of the operation, reduce the rotational speed of the electric motor to the actual rotational speed at which the first upper limit value is equal to or greater than the requested torque.

7. The electric working machine according to claim 1, further comprising:

a battery unit to supply electric power to the electric motor;
an inverter to adjust electric power supplied from the battery unit to the electric motor; and
a memory and/or a storage to store the first map and the second map; wherein
the controller is configured or programmed to control the output torque by outputting an instruction signal to the inverter based on the first map or the second map.

8. The electric working machine according to claim 1, further comprising:

a battery unit to supply electric power to the electric motor;
an inverter to adjust electric power supplied from the battery unit to the electric motor; and
a memory and/or a storage to store (i) a third map which is obtained by converting the first upper limit value of the first map into an output power of the electric motor and which shows a relationship between the actual rotational speed and the output power and (ii) a fourth map which is obtained by converting the first upper limit value of the second map into the output power and which shows a relationship between the actual rotational speed and the output power; wherein
the controller is configured or programmed to control the output torque by outputting an instruction signal to the inverter based on the third map or the fourth map.

9. The electric working machine according to claim 1, further comprising:

a battery unit to supply electric power to the electric motor;
an inverter to adjust electric power supplied from the battery unit to the electric motor; and
a memory and/or a storage to store (i) a fifth map which is obtained by converting the first upper limit value of the first map into a current value of electric power supplied to the electric motor and which shows a relationship between the actual rotational speed and the current value and (ii) a sixth map which is obtained by converting the first upper limit value of the second map into the current value and which shows a relationship between the actual rotational speed and the current value; wherein
the controller is configured or programmed to control the output torque by outputting an instruction signal to the inverter based on the fifth map or the sixth map.

10. The electric working machine according to any one of claims 1 to 9, further comprising a mode switch to be operated to switch the modes; wherein
the controller is configured or programmed to switch the modes in response to an operation of the mode switch.

11. A method of controlling an electric working machine including an electric motor, the method comprising:
controlling the electric motor selectively using a first map that defines a relationship between an actual rotational speed of the electric motor and a first upper limit value of an output torque of the electric motor or using a second map in which the first
upper limit value of the output torque corresponding to each actual rotational speed is smaller than that of the first map.

Fig.1

EP 4 644 619 A1

# Fig.2

Fig.3

Output torque T (Nm)

Gb

s1

G1

s2

1000 (Rt1, Ra11)  1200  1400  1600  1800  2000  2200 (Rt2, Ra21)

Actual rotational speed Ra (rpm/min)

Fig.4

Fig.5A

EP 4 644 619 A1

Fig.5B

Fig.6

```
              ┌──────────┐
              │  Start   │
              └────┬─────┘
                   │                    ┌─ S1
      ┌────────────▼─────────────┐
      │  Acquire operation signal │
      └────────────┬─────────────┘
                   │                    ┌─ S2
      ┌────────────▼─────────────┐
      │       Switch mode        │
      └────────────┬─────────────┘
                   │                    ┌─ S3
      ┌────────────▼─────────────┐
      │       Acquire map        │
      └────────────┬─────────────┘
                   │                    ┌─ S4
      ┌────────────▼─────────────┐
      │ Calculate actual rotational speed │
      └────────────┬─────────────┘
                   │              ┌─ S5
              ◇────▼────◇              No
              │ First mode? │──────────────┐
              ◇─────────◇                  │
                   │ Yes                    │
                   │        ┌─ S6           │         ┌─ S7
      ┌────────────▼──────────────┐  ┌──────▼──────────────────┐
      │ Control electric mode based│  │ Control electric mode based│
      │  on actual rotational speed│  │  on actual rotational speed│
      │       and first map        │  │       and second map       │
      └────────────┬──────────────┘  └──────┬──────────────────┘
                   │◄──────────────────────┘
                   │              ┌─ S8
   No         ◇────▼────◇
  ┌───────────│ Is starter switch OFF? │
  │           ◇─────────◇
  │                │ Yes
  │           ┌────▼─────┐
  │           │   End    │
  │           └──────────┘
```

Fig.7

EP 4 644 619 A1

Fig.8

Fig.9

Fig.10

# EP 4 644 619 A1

## INTERNATIONAL SEARCH REPORT

International application No.

**PCT/JP2023/037821**

| A. | CLASSIFICATION OF SUBJECT MATTER |
|---|---|

*E02F 9/20*(2006.01)i; *B60L 9/18*(2006.01)i; *B60L 50/60*(2019.01)i; *B60L 58/10*(2019.01)i
FI:   E02F9/20 C; B60L9/18 J; B60L50/60; B60L58/10

According to International Patent Classification (IPC) or to both national classification and IPC

| B. | FIELDS SEARCHED |
|---|---|

Minimum documentation searched (classification system followed by classification symbols)

E02F9/20; B60L9/18; B60L50/60; B60L58/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2016/114406 A1 (KOMATSU LTD.) 21 July 2016 (2016-07-21) | 1-3, 7, 11 |
| | paragraphs [0001], [0017], [0047]-[0100], fig. 2-15 | |
| A | | 4-6, 8-10 |
| A | JP 2010-081775 A (SANYO ELECTRIC CO., LTD.) 08 April 2010 (2010-04-08) | 1-11 |
| | entire text, all drawings | |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 December 2023** | **26 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2023/037821** |

| Patent document cited in search report | Publication date (day/month/year) | Patent family member(s) | Publication date (day/month/year) |
| --- | --- | --- | --- |
| WO 2016/114406 A1 | 21 July 2016 | US 2017/0203748 A1 paragraphs [0001], [0062]-[0119], fig. 2-14 CN 105849338 A | |
| JP 2010-081775 A | 08 April 2010 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013144888 A